# EUROPÄISCHE PATENTSCHRIFT

(11) **EP 2 608 927 B1**
(45) Veröffentlichungstag und Bekanntmachung des Hinweises auf die Patenterteilung: **16.07.2014**
(21) Anmeldenummer: 11801563.5
(22) Anmeldetag: 29.08.2011
(51) Int. Cl.: B23Q 11/10

(54) **MINIMALMENGEN-KÜHLSCHMIERSYSTEM**
MINIMAL-AMOUNT COOLING LUBRICATION SYSTEM
SYSTÈME DE LUBRIFIANT RÉFRIGÉRANT UTILISANT DES QUANTITÉS MINIMALES

(30) Priorität: 27.08.2010 DE 102010035668
(43) Veröffentlichungstag der Anmeldung: 03.07.2013
(73) Patentinhaber: Datron AG, 64367 Mühltal-Traisa (DE)
(72) Erfinder: RECK, Matthias, 64372 Ober-Ramstadt (DE)
(74) Vertreter: Jakelski & Althoff
(86) Internationale Anmeldenummer: PCT/DE2011/001649
(87) Internationale Veröffentlichungsnummer: WO 2012/028138

(56) Entgegenhaltungen:
- EP-A1- 0 509 130
- WO-A1-88/09230
- DE-A1- 10 238 203
- DE-A1- 19 915 265
- US-A- 3 478 843
- US-A- 5 678 466

## Beschreibung

### Stand der Technik

Die Erfindung geht aus von einem Minimalmengen-Kühlschmiersystem und von einem Verfahren zum Betreiben des Minimalmengen-Kühlschmiersystems nach der Gattung der unabhängigen Ansprüche.

Die Erfindung betrifft weiterhin ein Computerprogramm zum Betreiben des Minimalmengen-Kühlschmiersystems.

Ein gattungsgemäßes Minimalmengen-Kühlschmiersystem geht aus der DE 102 38 203 A1 hervor. Dieses Minimalmengen-Kühlschmiersystem, welches ein Kühl-/Schmiermittel für eine Werkzeugmaschine bereitstellt, weist eine volumetrische Dosierpumpe zur Förderung des Kühl-/Schmiermittels sowie eine Steueranordnung zum Ansteuern der Dosierpumpe in Abhängigkeit von einer vorgegebenen Soll-Dosierrate des Kühl-/Schmiermittels auf.

In der Offenlegungsschrift US 2004/0079207 A1 ist ein Minimalmengen-Kühlschmiersystem beschrieben, bei dem der Schwerpunkt auf der Kühlung liegt. Als Kühlmittel sind Wassertröpfchen vorgesehen, die mit Öl benetzt sind, wobei die Wassertröpfchen mittels Pressluft in einem Mischer gebildet werden. Die Pressluft wird von einem Kompressor bereitgestellt. Die Luftströmung wird mit einem Steuerventil auf einen vorgegebenen Wert festgelegt. Zur Förderung des Wassers ist eine Wasserpumpe und zur Förderung des Öls eine Ölpumpe vorgesehen. Die beiden Pumpen bringen die Flüssigkeiten jeweils auf einen bestimmten, nicht näher angegebenen Druck, der fest vorgegeben ist. Die Strömungen des Wassers und des Öls stellen sich in Abhängigkeit von der eingestellten Luftströmung auf einen bestimmten Wert ein. Sowohl das Wasser als auch das Öl werden aus drucklosen Behältern ansaugt.

Das Gebrauchsmuster DE-G 89 09 995.8 U1 beschreibt ein Minimalmengen-Kühlschmiersystem, welches eine Pumpe enthält, die ein Schmiermittel aus einem drucklosen Vorratsbehälter ansaugt. Die Pumpe kann hydraulisch, pneumatisch oder elektrisch angetrieben werden. Die Pumpe stellt einen Schmiermitteldruck bereit, der auf einen festen Wert eingestellt ist, der im Bereich von 50 - 100 bar liegen kann. Die Einstellung der Förderrate des Schmiermittels erfolgt mit Zumess-Ventilen, welche in einem Schmierstoff-Luft-Verteiler angeordnet sind. Im Verteiler wird der Schmierstoff mit einer bereitgestellten Pressluft zerstäubt.

Das in der Offenlegungsschrift DE 10 2004 034 689 A1 beschriebene Minimalmengen-Kühlschmiersystem baut auf unterschiedliche Vorrichtungen auf. Bei der ersten Vorrichtung ist eine Pumpe vorgesehen, die ein Schmiermittel aus einem drucklosen Vorratsbehälter ansaugt und mit einer elektrisch einstellbaren Förderrate zu einem Aerosolraum transportiert, in welchem das Schmiermittel mit Pressluft zerstäubt wird. Bei der Pumpe handelt es sich um eine volumetrisch fördernde Pumpe, bei welcher eine Hubvolumenänderung mittels eines Elektromagneten vorgesehen ist. Eine andere Vorrichtung sieht eine elektromotorisch angetriebene Förderpumpe vor, die das Schmiermittel ebenfalls aus einem drucklosen Vorratsbehälter ansaugt. Bei dieser Ausgestaltung wird die Förderrate mit einer nicht näher beschriebenen Dosiereinrichtung eingestellt.

Das in der Offenlegungsschrift DE 199 15 265 A1 angegebene Minimalmengen-Kühlschmiersystem sieht zur Erzeugung von Tröpfchen einen Ultraschall-Zerstäuber vor, der eine Einstellung der Tröpfchengröße beziehungsweise des Tröpfchenspektrums unabhängig vom Luftdruck und unabhängig von der Schmiermittel-Transportgeschwindigkeit erlaubt. Hierzu werden die Druckluft und das Schmiermittel über separate Zuleitungen in einen Mischungsbereich geführt. Zur Förderung des Schmiermittels wird eine Förderpumpe mit einer fest vorgegebenen Förderrate, beispielsweise eine Doppelkolbenpumpe oder eine Schlauchpumpe eingesetzt. Das beschriebene Minimalmengen-Kühlschmiersystem kann in Abhängigkeit von der Materialzusammensetzung des zu bearbeiteten Werkstücks unterschiedliche Kühlschmierstoffe dadurch auswählen, dass die Schmierstoffzuleitung wahlweise an verschiedene, unter Druck stehende Schmiermittelvorratsbehälter angeschlossen wird, welche die jeweils unterschiedlichen Schmiermittel enthalten.

Der Erfindung liegt die Aufgabe zugrunde, ein Minimalmengen-Kühlschmiersystem und ein Verfahren zum Betreiben des Minimalmengen-Kühlschmiersystems anzugeben, die mit einfachen Mitteln ein zur Bearbeitung eines Werkstücks in einer Werkzeugmaschine vorgebbares Kühlmittel beziehungsweise Schmiermittel mit einer vorgebbaren Förderrate bereitstellen.

Die Aufgabe wird durch die in den unabhängigen Ansprüchen angegebenen Merkmale jeweils gelöst.

### Offenbarung der Erfindung

Die Erfindung geht aus von einem Minimalmengen-Kühlschmiersystem, welches ein Kühl-/Schmiermittel für eine Werkzeugmaschine bereitstellt, von einer volumetrischen Dosierpumpe zur Förderung des Kühl-/Schmiermittels und von einer Steueranordnung zum Ansteuern der Dosierpumpe in Abhängigkeit von einer vorgegebenen Soll-Dosierrate des Kühl-/Schmiermittels. Das erfindungsgemäße Minimalmengen-Kühlschmiersystem zeichnet sich dadurch aus, dass wenigstens zwei Vorratsbehälter zur Bereitstellung von Kühl-/Schmiermitteln vorgesehen sind, dass die Vorratsbehälter an einer Auswahlventilanordnung angeschlossen sind und dass die Steueranordnung wenigstens ein Ventil-Ansteuersignal zur Ansteuerung der Auswahlventilanordnung zur Auswahl wenigstens eines Vorratsbehälters bereitstellt.

Mittels des wenigstens einen Ventil-Ansteuersignals wird ein bestimmter Vorratsbehälter ausgewählt. Rein prinzipiell können gleichzeitig zwei oder mehr Vorratsbehälter ausgewählt werden, aus denen das Kühl-/Schmiermittel bezogen werden soll. Die freie Auswahlmöglichkeit wenigstens eines Kühl-/Schmiermittels in Verbindung mit der bedarfsweisen Einstellung der volumetrischen Dosierpumpe auf die vorgegebene Förderrate vereinfachen in besonderem Maße die Bedienung der Werkzeugmaschine beziehungsweise des Minimalmengen-Kühlschmiersystems. Insbesondere wird die Rüstzeit minimiert. Dadurch können in schneller Folge unterschiedliche Werkstücke bearbeitet werden, die jeweils den Einsatz von unterschiedlichen Kühl-/Schmiermitteln mit unterschiedlichen Förderraten erfordern.

Weiterhin kann beim Einsatz des erfindungsgemäßen Minimalmengen-Kühlschmiersystems eine Stillstandszeit der Werkzeugmaschine dadurch vermieden werden, dass innerhalb von zwei Vorratsbehältern ein identisches Kühl-/Schmiermittel vorgehalten wird, sodass von einem auf den anderen Vorratsbehälter umgeschaltet werden und der leere Vorratsbehälter ohne den Bearbeitungsvorgang in der Werkzeugmaschine zu unterbrechen, ausgetauscht werden kann.

Vorteilhafte Ausgestaltungen und Weiterbildungen sind jeweils Gegenstände der abhängigen Ansprüche.

Gemäß einer besonders vorteilhaften Ausgestaltung ist die volumetrische Dosierpumpe als Zahnradpumpe realisiert. Der wesentliche Vorteil der Zahnradpumpe liegt darin, dass die Förderrate auf einfache Weise über die Drehzahl der Zahnradpumpe eingestellt werden kann.

Vorzugsweise werden die Vorratsbehälter höher als die Zahnradpumpe positioniert. Damit kann die Zahnradpumpe die Kühl-/Schmiermittel problemlos ansaugen. Insbesondere können dann die Kühl-/Schmiermittel in den Vorratsbehältern drucklos gelagert werden, wodurch sich die Handhabung der Vorratsbehälter erheblich vereinfacht.

Besonders einfach wird die Vorgabe einer bestimmten Drehzahl und damit einer bestimmten Förderrate mit einem elektromotorischen Pumpen-Antrieb. Der elektromotorische Antrieb kann mit einem Gleichstrommotor realisiert sein. Die Drehzahl wird dann beispielsweise im Rahmen einer Drehzahlsteuerung mittels einer Impulsbreitenmodulation der Antriebsspannung eingestellt. Alternativ enthält der elektromotorische Antrieb einen elektronisch kommutierten Motor, bei dem die Drehzahl bereits mittels eines mehrphasigen drehfelderzeugenden Ahsteuerns vorgegeben wird.

Eine andere Ausgestaltung betrifft die Auswahlventilanordnung, die mehrere 2/2-Wege-Ventile enthalten kann wobei jedem Vorratsbehälter ein 2/2-Wege-Ventil zugeordnet ist. Alternativ kann die Auswahlventilanordnung wenigstens ein Umschaltventil zur Auswahl eines Vorratsbehälters aufweisen. Die 2/2-Wege-Ventile können preiswert realisiert werden und können aggressiven Kühl-/Schmiermitteln dennoch widerstehen.

Eine weitere Ausgestaltung sieht vor, dass die Vorratsbehälter mit Pegelsensoren, zur Erfassung der Kühl-/Schmiermittel-Pegelstände ausgestattet sind, die zumindest als Pegelschalter realisiert sind.

Eine Anzeige des Pegelstands der Kühl-/Schmiermittel in den Vorratsbehältern mittels eines Pegelstand-Anzeigesignals und/oder die Anzeige einer anhand einer eingestellten Verbrauchsrate ermittelte Restlaufzeit mittels eines Restlaufsignals vereinfachen die Handhabung des erfindungsgemäßen Minimalmengen-Kühlschmiersystems.

Weitere Ausgestaltungen sehen den Einsatz einer Entlüftungsvorrichtung zur Entlüftung des Minimalmengen-Kühlschmiersystems und/oder eines Rückschlagventils vor. Dadurch vereinfacht sich weiterhin die Handhabung des erfindungsgemäßen Minimalmengen-Kühlschmiersystems.

Eine Weiterbildung sieht vor, dass die Werkzeugmaschine eine Werkzeug-Detektionsvorrichtung, zumindest jedoch eine Werkzeugtabelle enthält, welche der Steueranordnung ein Werkzeugsignal zur Verfügung stellt. Weiterhin kann eine Kenngrößen-Bereitstellung vorgesehen sein, welche der Steueranordnung ein Kenngrößensignal zur Verfügung stellt. Mit diesen Signalen können die Auswahl eines bestimmten Kühl-/Schmiermittels sowie die Festlegung der Förderrate in der Steueranordnung, die vorzugsweise als speicherprogrammierbare Steuerung (SPS) realisiert ist, automatisch erfolgen.

Die Bedienung des erfindungsgemäßen Minimalmengen-Kühlschmiersystems erfolgt über ein Bediengerät, das in der Werkzeugmaschine enthalten sein kann. Das Bediengerät kann jedoch auch dem Minimalmengen-Kühlschmiersystem zugeordnet sein. Vorzugsweise ist das Bediengerät als Handbedienpult ausgebildet.

Eine Ausgestaltung sieht den Einsatz eines Rückschlagventils in den Saugleitungen vor, welche in den Vorratsbehältern münden. Dadurch wird ein Rückfluss des Kühl-/Schmiermittels beim Wechsel der Vorratsbehälter vermieden.

Das erfindungsgemäße Verfahren zum Betreiben des Minimalmengen-Kühlschmiersystems sieht vor, dass die Steueranordnung die Ventil-Ansteuersignale und/oder ein Elektromotor-Ansteuersignal in Abhängigkeit von zumindest einer folgender Kenngrößen bereitstellt: Werkstück-Material, Werkzeugtyp, Werkzeugdurchmesser, Vorschub des Werkzeugs, Zerspanleistung des Werkzeugs, Arbeitstiefe, Viskosität des Kühl-/Schmiermittels, Schmierleistung des Schmiermittels, Kühlleistung des Kühlmittels, Bearbeitungsrichtung, Bearbeitung einer Kante des Werkstücks oder Vollschnitt. Die Abhängigkeiten werden vorzugsweise in einer in der Steueranordnung enthaltenen Tabelle hinterlegt.
Die Restlaufzeit des Minimalmengen-Kühlschmiersystems kann in der Steueranordnung aus den bekannten Pegelständen der Kühl-/Schmiermittel in den einzelnen Vorratsbehältern und anhand der aktuellen Förderrate ermittelt und angezeigt werden.

Das erfindungsgemäße Computerprogramm zum Betreiben des Minimalmengen-Kühlschmiersystems führt sämtliche Schritte zum Betreiben des Minimalmengen-Kühlschmiersystems aus, wenn es in der Steueranordnung abläuft.

Weitere vorteilhafte Weiterbildungen und Ausgestaltungen des erfindungsgemäßen Minimalmengen-Kühlschmiersystems ergeben sich aus der folgenden Beschreibung. Ausführungsbeispiele der Erfindung sind in der Zeichnung dargestellt und in der nachfolgenden Beschreibung näher erläutert.

### Kurzbeschreibung der Figuren

Es zeigen
Figur 1 eine Skizze einer Werkzeugmaschine mit einem Werkzeug, für dessen Kühlung beziehungsweise Schmierung ein erfindungsgemäßes Minimalmengen-Kühlschmiersystem vorgesehen ist,
Figur 2 eine Skizze des erfindungsgemäßen Minimalmengen-Kühlschmiersystems gemäß einer ersten Ausgestaltung,
Figur 3 ein Bediengerät des erfindungsgemäßen Minimalmengen-Kühlschmiersystems,
Figur 4 ein Blockschaltbild einer Steueranordnung des erfindungsgemäßen Mini-malmengen-Kühlschmiersystems,
Figur 5 eine Skizze des erfindungsgemäßen Minimalmengen-Kühlschmiersystems gemäß einer anderen Ausgestaltung
Figur 6 eine Detailansicht im Bereich eines Vorratsbehälters, in welchem ein Kühl-/Schmiermittel gelagert ist und
Figur 7 ein als Handbedienpult ausgestaltetes Bediengerät.

### Ausführliche Beschreibung

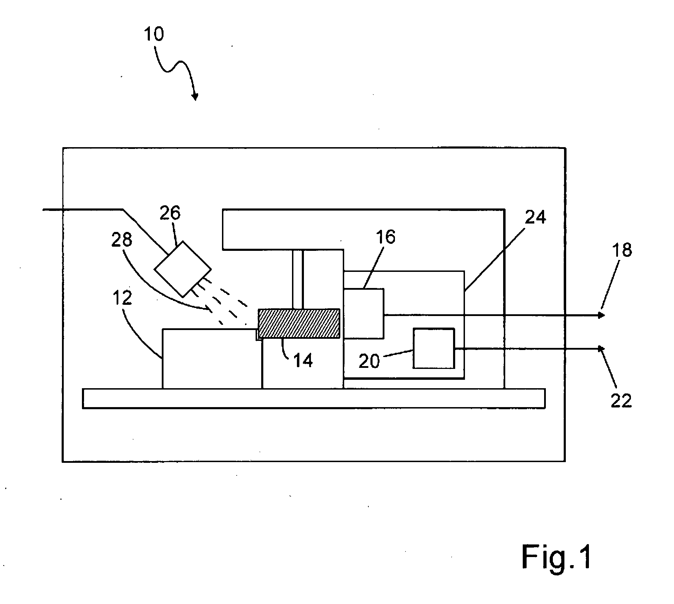

Figur 1 zeigt eine Werkzeugmaschine 10, welche zum Bearbeiten eines Werkstücks 12 vorgesehen ist. Im gezeigten Ausführungsbeispiel wird davon ausgegangen, dass als Werkzeug 14, welches das Werkstück 12 bearbeitet, ein Fräser vorgesehen ist. Die Werkzeugmaschine 10 enthält eine Werkzeug-Detektionsvorrichtung 16 oder zumindest eine Werkzeugtabelle, welche ein Werkzeugsignal 18 bereitstellt sowie eine Kenngrößen-Bereitstellung 20, welche ein Kenngrößensignal 22 bereitstellt. Die Werkzeug-Detektionsvorrichtung 16 und die Kenngrößen-Bereitstellung 20 können in einer Werkzeugmaschinensteuerung 24 enthalten sein.

Die Werkzeugmaschine 10 enthält weiterhin eine Sprühvorrichtung 26, welche ein Kühlmittel und/oder ein Schmiermittel auf den Bearbeitungsbereich zwischen Werkstück 12 und Werkzeug 14 sprüht. Ein Schmiermittel kann gleichzeitig eine Kühlfunktion aufweisen. Ausgegangen werden kann alternativ von einem Kühlmittel, das gleichzeitig eine Schmierfunktion aufweist. Denkbar ist weiterhin der Einsatz von Mischungen aus einem Schmiermittel und einem Kühlmittel, wobei in diesem Fall optimale Eigenschaften für jede der beiden Funktionen herausgebildet werden können. Im Folgenden wird nicht mehr zwischen der Schmierfunktion und der Kühlfunktion unterschieden und die gesprühte Flüssigkeit als Kühl-/Schmiermittel 28 bezeichnet.

Das von der Werkzeug-Detektionsvorrichtung 16 oder der Werkzeugtabelle (nicht dargestellt) bereitgestellte Werkzeugsignal 18 spiegelt beispielsweise den Typ und die Größe des Werkzeugs 14, also beispielsweise den Fräsertyp und den Fräserdurchmesser wider.

Das von der Kenngrößen-Bereitstellung 20 zur Verfügung gestellte Kenngrößensignal 22 spiegelt beispielsweise die Zerspanleistung, den Vorschub, das Werkstück-Material, die Bearbeitungsrichtung oder die Information, ob eine Kante bearbeitet oder ein Vollschnitt vorgesehen ist, wider.

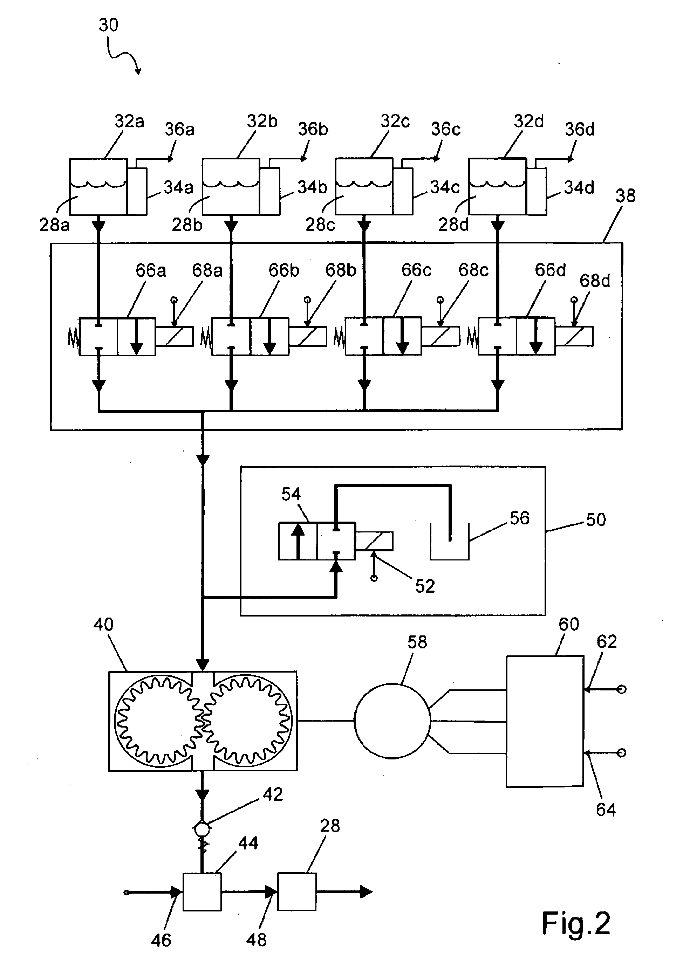

Figur 2 zeigt das erfindungsgemäße Minimalmengen-Kühlschmiersystem 30. Vorgesehen sind wenigstens zwei Vorratsbehälter 32a, 32b, 32c, 32d, in welchen unterschiedliche Kühl-/Schmiermittel 28a, 28b, 28c, 28d gelagert sind. Im gezeigten Ausführungsbeispiel wird von vier Vorratsbehältern 32a, 32b, 32c, 32d ausgegangen. Den Vorratsbehältern 32a, 32b, 32c, 32d sind jeweils Pegelsensoren 34a, 34b, 34c, 34d zugeordnet, welche den Pegelstand des Kühl-/Schmiermittels 28a, 28b, 28c, 28d erfassen und ein entsprechendes Pegelsignal 36a, 36b, 36c, 36d bereitstellen. Im einfachsten Fall können auch lediglich Pegelschalter (nicht gezeigt) vorgesehen sein.

Das Kühl-/Schmiermittel 28a, 28b, 28c, 28d gelangt über eine Auswahlventilanordnung 38 an eine Dosierpumpe 40, welche das Kühl-/Schmiermittel 28a, 28b, 28c, 28d über ein Rückschlagventil 42 zu einem Mischer 44 pumpt, in welchem das Kühl-/Schmiermittel 28a, 28b, 28c, 28d mit Druckluft 46 vermischt wird. Das mit Druckluft vermischte Kühl-/Schmiermittel 28a, 28b, 28c, 28d wird der Sprühvorrichtung 26 der Werkzeugmaschine 10 zur Verfügung gestellt.

Das Kühl-/Schmiermittel 28a, 28b, 28c, 28d gelangt weiterhin an eine Entlüftungsvorrichtung 50, welche ein von einem Entlüftungsventil-Ansteuersignal 52 schaltbares Entlüftungsventil 54 und einen Auffangbehälter 56 enthält.

Die Dosierpumpe 40 ist als Zahnradpumpe realisiert, welche von einem elektromotorischen Antrieb 58 angetrieben wird. Der elektromotorische Antrieb 58 ist an einer Elektromotor-Ansteuerung 60 angeschlossen, welche mit einer Energieversorgung 62 verbunden ist und welcher ein Motorsteuersignal 64 zur Verfügung gestellt ist.

Die Auswahlventilvorrichtung 38 enthält 2/2-Wege-Ventile 66a, 66b, 66c, 66d, wobei jedem Vorratsbehälter 32a, 32b, 32c, 32d ein 2/2-Wege-Ventil 66a, 66b, 66c, 66d zugeordnet ist. Im gezeigten Ausführungsbeispiel sind federverspannte 2/2-Wege-Ventile 66a, 66b, 66c, 66d gezeigt, die jeweils von einem Ventil-Ansteuersignal 68a, 68b, 68c, 68d angesteuert werden.

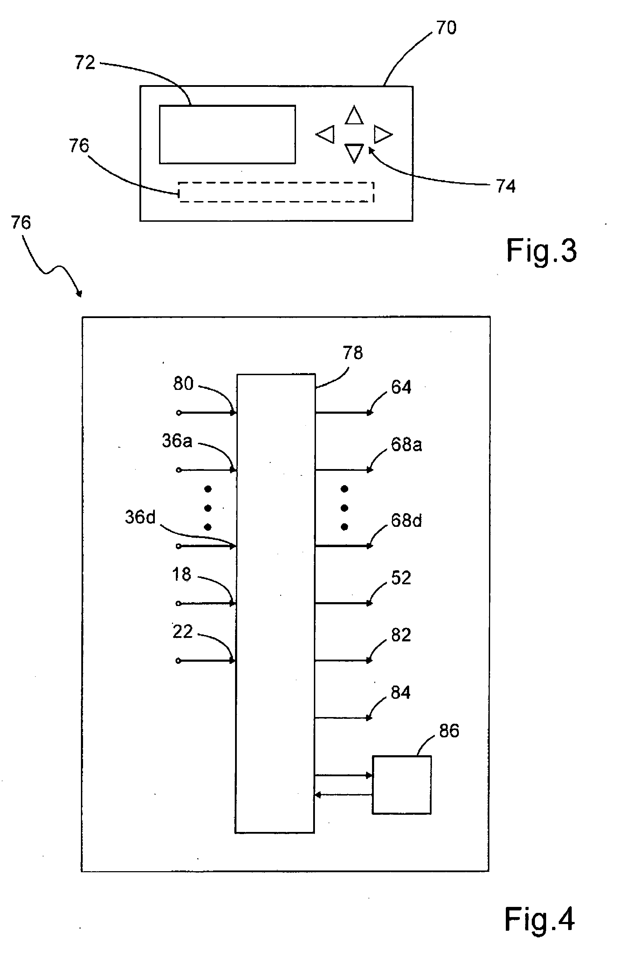

Figur 3 zeigt ein Bediengerät 70 des Minimalmengen-Kühlschmiersystems 30. Das Bediengerät 70 enthält eine Anzeigevorrichtung 72 sowie eine Eingabevorrichtung 74. Strichliniert ist eine Minimalmengen-Kühlschmiersystem-Steuerung 76 eingetragen, die im Bediengerät 70 enthalten sein kann.

Figur 4 zeigt ein Blockschaltbild der Minimalmengen-Kühlschmiersystem-Steuerung 76, die gegebenenfalls im Bediengerät 70 enthalten oder als separate Minimalmengen-Kühlschmiersystem-Steuerung 76 realisiert ist oder in einer Steuerung der Werkzeugmaschine 10 integriert ist.

Die Minimalmengen-Kühlschmiersystem-Steuerung 76 enthält eine Steueranordnung 78, der als Eingangssignale ein von der Eingabevorrichtung 74 kommendes Eingabesignal 80, die Pegelsignale 36a, 36b, 36c, 36d, das Werkzeugsignal 18 sowie zumindest das Kenngrößensignal 22 zugeführt werden, und die das Motorsteuersignal 64, die Ventil-Ansteuersignale 68a, 68b, 68c, 68d, das Entlüftungsventil-Ansteuersignal 52 sowie zumindest noch ein Pegelstand-Anzeigesignal 82 und ein Restlaufzeitsignal 84 bereitstellt. Die Minimalmengen-Kühlschmiersystem-Steuerung 76 enthält weiterhin eine Tabelle 86, die mit der Steueranordnung 78 kommuniziert.

Die Minimalmengen-Kühlschmiersystem-Steuerung 76 beziehungsweise die Steueranordnung 78 wird vorzugsweise als speicherprogrammierbare Steuerung (SPS) realisiert.

Das erfindungsgemäße Minimalmengen-Kühlschmiersystem 30 arbeitet folgendermaßen:

Die Werkzeugmaschine 10 bearbeitet das Werkstück 12, wobei im gezeigten Ausführungsbeispiel vom Fräser 14 ausgegangen wird. Der Fräser 14 ist ein bestimmter Fräsertyp, der weiterhin einen bestimmten Fräserdurchmesser aufweist. Die Daten des Werkzeugs 14 können direkt über die Eingabevorrichtung 74 des Bediengeräts 70 eingegeben werden. Vorzugsweise ist die Werkzeug-Detektionsvorrichtung 16 vorgesehen, welche die Daten beispielsweise mittels einer Tabelle, einer optischen Erkennung des Werkzeugs, mittels Einlesens eines Barcodes oder mittels eines dem Werkzeug zugeordneten RFID erfasst und als Werkzeugsignal 18 der Steueranordnung 78 zur Verfügung stellt. Die Werkzeug-Detektionsvorrichtung 16 kann alternativ nur als Tabelle realisiert sein, in welcher die Werkzeugdaten hinterlegt sind.

Weiterhin kann die Bereitstellung weiterer Kenngrößen der Werkstückbearbeitung vorgesehen sein. Mit dem Kenngrößensignal 22, welches beispielsweise die Kenngrößenbereitstellung 20 bereithält, können die erwartete Zerspanleistung, der Vorschub, die Frästiefe, die Viskosität des Kühl-/Schmiermittels 28a, 28b, 28c, 28d, die Kühlleistung und/oder die Schmierleistung des Kühl-/Schmiermittels 28a, 28b, 28c, 28d, das Werkstück-Material, die Bearbeitungsrichtung und/oder eine Information darüber, ob eine Kante des Werkstücks 12 oder ein Vollschnitt vorgesehen sind, sowie weitere, nicht näher bezeichnete Kenngrößen bereitgestellt werden. Alternativ können die Kenngrößen auch über die Eingabevorrichtung 74 der Bedienvorrichtung 70 eingegeben werden. Diese Werte werden der Steueranordnung 78 über das Eingabesignal 80 mitgeteilt.

In Abhängigkeit vom Eingabesignal 80, gegebenenfalls des Werkzeugsignals 18 und/oder gegebenenfalls des Kenngrößensignals 22 und/oder gegebenenfalls der Pegelsignale 36a, 36b, 36c, 36d legt die Steueranordnung 78 das Motorsteuersignal 64, die Ventil-Ansteuersignale 36a, 36b, 36c, 36d, das Entlüftungsventil-Ansteuersignal 52, das Pegelstand-Anzeigesignal 82 und/oder das Restlaufzeitsignal 84 fest. Hierzu kann die Steueranordnung 78 auf die Tabelle 86 zurückgreifen, in welcher die Zusammenhänge hinterlegt sind. Alternativ können die Zusammenhänge zumindest teilweise als Formeln hinterlegt sein, wobei die Ausgangssignale 64, 68a - 68d aufgrund von Berechnungen wie beispielsweise Interpolationen festgelegt werden.

Mittels der Ventil-Ansteuersignale 36a, 36b, 36c, 36d wird ein Vorratsbehälter 32a, 32b, 32c, 32d oder gegebenenfalls mehrere Vorratsbehälter 32a, 32b, 32c, 32d gleichzeitig ausgewählt, aus dem / aus denen das Kühl-/Schmiermittel 28a, 28b, 28c, 28d bezogen werden soll. Die freie Auswahlmöglichkeit vereinfacht in besonderem Maße die Bedienung der Werkzeugmaschine 10 beziehungsweise des Minimalmengen-Kühlschmiersystems 30 dadurch, dass die Rüstzeit minimiert wird. So können in schneller Folge unterschiedliche Werkstücke 12 bearbeitet werden, die jeweils den Einsatz von unterschiedlichen Kühl-/Schmiermitteln 28a, 28b, 28c, 28d erfordern.

Besonders vorteilhaft ist der Einsatz einer Zahnradpumpe als Dosierpumpe 40. Die Zahnradpumpe ermöglicht den Transport der Kühl-/Schmiermittel 28a, 28b, 28c, 28d aus den Vorratsbehältern 32a, 32b, 32c, 32d zum Mischer 44 beziehungsweise zur Sprühvorrichtung 26, wobei vorteilhaft vorgesehen ist, dass die Vorratsbehälter 28a, 28b, 28c, 28d erhöht in Bezug auf die Zahnradpumpe 40 positioniert sind, damit ein einfaches Ansaugen erfolgen kann. Hierbei ergibt sich jedoch der wesentliche weitere Vorteil, dass die Kühl-/Schmiermittel 28a, 28b, 28c, 28d in den Vorratsbehältern 32a, 32b, 32c, 32d drucklos gelagert werden können. Dadurch ist eine besonders einfache Handhabung der Vorratsbehälter 32a, 32b, 32c, 32d möglich.

Ein wesentlicher Vorteil der Zahnradpumpe 40 liegt darin, dass die Förderrate einfach über die Drehzahl der Zahnradpumpe 40 eingestellt werden kann. Die Förderrate beziehungsweise die Fördermenge ist proportional der Drehzahl, unabhängig von der temperaturabhängigen Viskosität des Kühl-/Schmiermittels. Besonders einfach wird die Vorgabe einer bestimmten Drehzahl und damit einer bestimmten Förderrate dann, wenn als Antrieb der elektromotorische Antrieb 58 eingesetzt wird.

Der elektromotorische Antrieb 58 kann mit einem Gleichstrommotor realisiert sein. Die Drehzahl wird dann beispielsweise im Rahmen einer Leistungssteuerung mittels einer Impulsbreitenmodulation der Antriebsspannung erreicht, wobei sich ein mittlerer Strom einstellt, der dem Drehmoment proportional ist. Die Drehzahl des Motors beziehungsweise der Zahnradpumpe 40 wird in diesem Fall mit einem nicht näher gezeigten Drehzahlsensor erfasst.

Alternativ enthält der elektromotorische Antrieb 58 einen elektronisch kommutierten Motor, bei dem die Drehzahl bereits mittels eines mehrphasigen drehfeldbereitstellenden Ansteuerns vorgegeben wird.

Die Antriebsenergie erhält der elektromotorische Antrieb 58 mit dem Energiesignal 62 zur Verfügung gestellt, während die Drehzahl mit der Motorsteuerung 60 beeinflusst wird, wobei vorzugsweise eine Drehzahlregelung vorgesehen ist. Die Beeinflussung der Drehzahl ermöglicht die Vorgabe der Soll-Förderrate des Kühl-/Schmiermittels 28a, 28b, 28c, 28d über eine entsprechende Soll-Drehzahl der Zahnradpumpe 40, die mittels des Motorsteuersignals 64 vorgegeben werden kann.

Zur Inbetriebnahme des Minimalmengen-Kühlschmiersystems 30 ist vorzugsweise die Entlüftungsvorrichtung 50 vorgesehen. Die Steueranordnung 78 steuert mit dem Entlüftungsventil-Ansteuersignal 52 das Entlüftungsventil 54, beispielsweise ein 2/2-Wege-Ventil, an und gibt einen Pfad für das Kühl-/Schmiermittel 28a, 28b, 28c, 28d frei, der über dem Auffangbehälter 56 mündet. Die Entlüftung kann auch, beispielsweise im Rahmen von Wartungsarbeiten, für eine Entleerung des Minimalmengen-Kühlschmiersystems 30 verwendet werden.

Die Steueranordnung 78 kann aufgrund der zur Verfügung stehenden Pegelsignale 36a, 36b, 36c, 36d den Pegelstand der Kühl-/Schmiermittel 28a, 28b, 28c, 28d in den Vorratsbehältern 32a, 32b, 32c, 32d ermitteln beziehungsweise bewerten und mit dem Pegelstand-Anzeigesignal 82 über die Anzeigevorrichtung 72 ablesbar zur Verfügung stellen. Eine Bedienperson kann dann rechtzeitig das benötigte Kühl-/Schmiermittel 28a, 28b, 28c, 28d nachfüllen oder den entsprechenden Vorratsbehälter 32a, 32b, 32c, 32d austauschen.

Weiterhin ist es möglich, das Pegelstand-Anzeigesignal 82 als optisches und/oder akustisches Warnsignal einzusetzen, sodass ein unterhalb eines Pegel-Schwellenwerts gefallenes Kühl-/Schmiermittel 28a, 28b, 28c, 28d bemerkt wird. Das rechtzeitige Nachfüllen oder der Tausch des Vorratsbehälters 32a, 32b, 32c, 32d sichert einen quasikontinuierlichen Betrieb der Werkzeugmaschine 10 und verhindert insbesondere ein schädliches Trockenlaufen der Zahnradpumpe 40.

Gegebenenfalls können zwei oder mehr Vorratsbehälter 32a, 32b, 32c, 32d mit identischem Kühl-/Schmiermittel 28a, 28b, 28c, 28d befüllt werden, sodass durch die Umschaltmöglichkeit von einem auf den anderen Vorratsbehälter 32a, 32b, 32c, 32d ein kontinuierlicher Betrieb aufrechterhalten werden kann.

Zusätzlich oder alternativ kann die Steueranordnung 78 das Restlaufzeitsignal 84 aus den Pegelsignalen 36a, 36b, 36c, 36d und weiteren Informationen wie insbesondere die Förderrate des Kühl-/Schmiermittels 28a, 28b, 28c, 28d ermitteln und bereitstellen. Auch in diesem Fall kann, gegebenenfalls mittels eines Restlaufzeit-Schwellenwerts, rechtzeitig ein Nachfüllen des Kühl-/Schmiermittels 28a, 28b, 28c, 28d oder ein Tausch des Vorratsbehälters 32a, 32b, 32c, 32d veranlasst und ein Trockenlaufen der Zahnradpumpe 40 verhindert werden.

Die Restlaufzeit kann in Abhängigkeit vom eingestellten Fräsprogramm ermittelt werden. In diesem Fall kann bereits vor der Inbetriebnahme der Werkzeugmaschine 10 eine Aufforderung zum Nachfüllen des Kühl-/Schmiermittels 28a, 28b, 28c, 28d erfolgen, wenn ein bestimmter Pegelstand nicht zur vollständigen Abarbeitung des Fräsprogramms reicht.

Eine besonders einfache Lösung sieht vor, einen einfachen Pegelschalter einzusetzen. Beim Unterschreiten des Pegels kann die Steueranordnung 78 über die eingestellte Verbrauchsmenge errechnen, wie lange das Kühl-/Schmiermittel 28a, 28b, 28c, 28d noch ausreicht. So kann über die Steueranordnung 78 gewährleistet werden, dass immer ausreichend Kühl-/Schmiermittel 28a, 28b, 28c, 28d zum Abarbeiten des Fräsprogramms vorhanden ist.

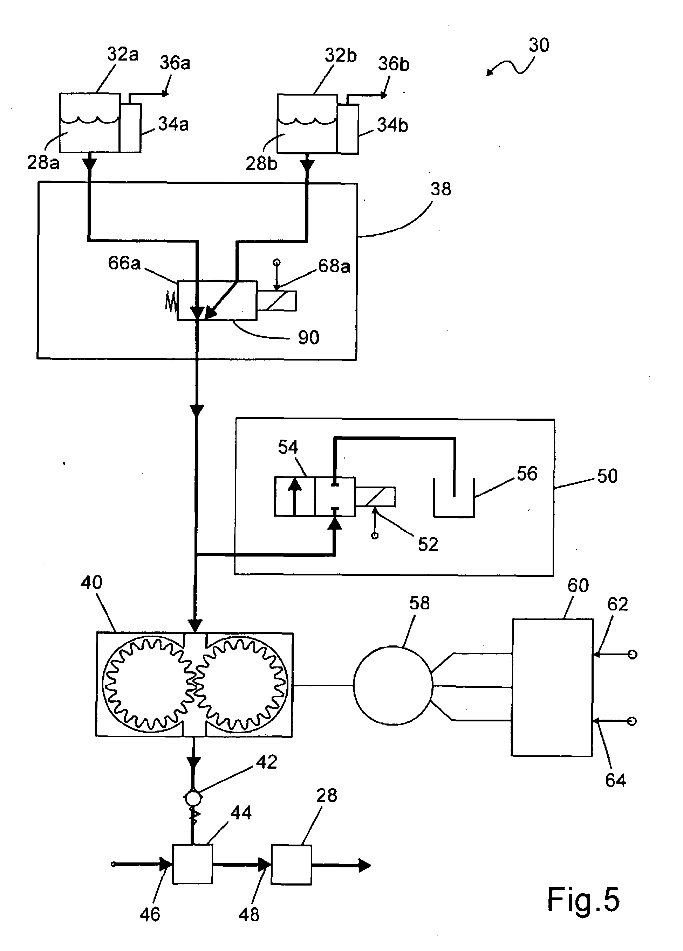

Figur 5 zeigt eine alternative Ausgestaltung des erfindungsgemäßen Minimalmengen-Kühlschmiersystems 30, bei der die Auswahlventilanordnung 38 anstelle von wenigstens zwei 2/2-Wege-Ventilen 66a, 66b, 66c, 66d ein Umschaltventil 90 aufweist, welches die unmittelbare Umschaltung von einem auf einen anderen Vorratsbehälter 32a, 32b, 32c, 32d gestattet. Der Vorteil der in Figur 5 gezeigten Ausgestaltung liegt gegenüber der in Figur 1 gezeigten Ausgestaltung des erfindungsgemäßen Minimalmengen-Kühlschmiersystems 30 in der preisgünstigeren Realisierung der Auswahlventilanordnung 38, wobei ein solches Umschaltventil 90 für weniger aggressive Kühl-/Schmiermittel 28a, 28b, 28c, 28d geeignet ist.

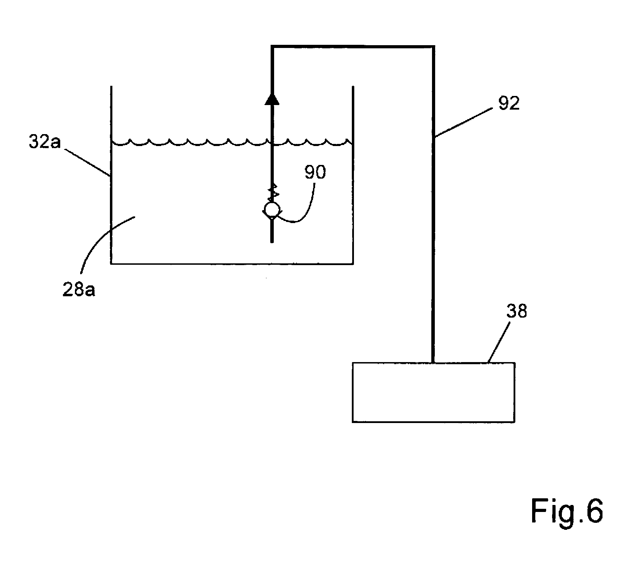

Figur 6 zeigt eine Detailansicht im Bereich eines Vorratsbehälters 28a. Eine vorteilhafte Ausgestaltung sieht ein Rückschlagventil 90 vor, das in der im Kühl-/Schmiermittel 28a, 28b, 28c, 28d mündenden Saugleitung 92 angeordnet ist. Das Rückschlagventil 90 verhindert einen Rückfluss des Kühl-/Schmiermittels 28a, 28b, 28c, 28d bei einem Wechsel des Vorratsbehälters 32a.

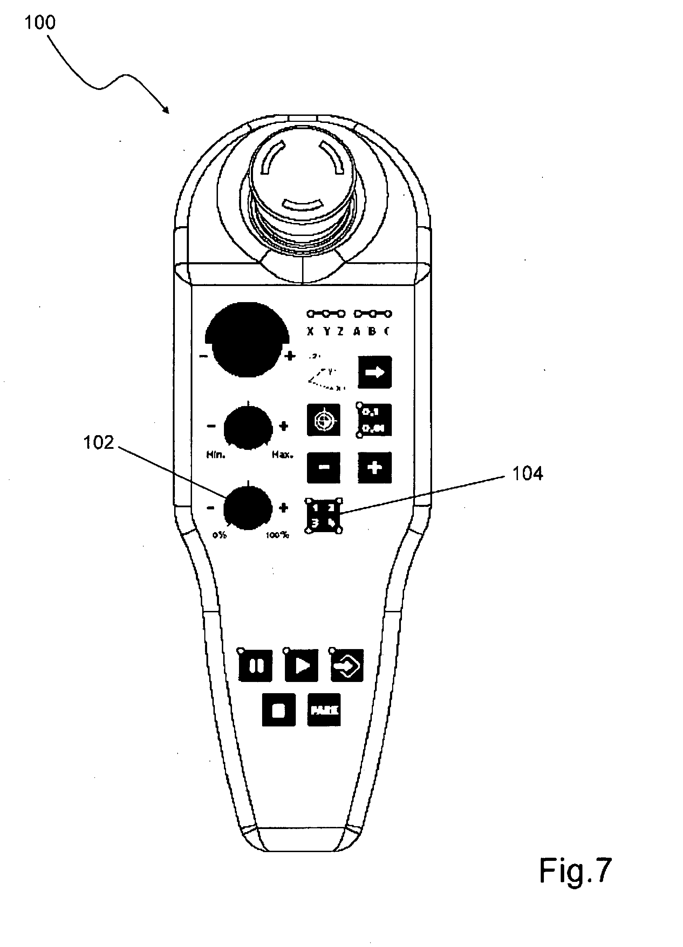

Das in Figur 3 gezeigte Bediengerät 70 kann gemäß einer vorteilhaften Ausgestaltung, die in Figur 7 gezeigt ist, als Handbedienpult 100 ausgestaltet sein, das zahlreiche Eingabeelemente wie Drucktaster, Potentiometer und/oder einen Joystick aufweisen kann. Beispielhaft sind in Figur 7 ein Dreh-Potentiometer 102 gezeigt, mit welchem die Dosierrate beziehungsweise die Dosiermenge eingestellt werden kann. Der Bereich kann von 0% bis 100% reichen. Weiterhin ist beispielhaft ein Drucktaster 104 gezeigt, mit dem ein bestimmter Vorratsbehälter 32a, 32b, 32c, 32d ausgewählt werden kann.

## Patentansprüche

1. Minimalmengen-Kühlschmiersystem, welches ein Kühl-/Schmiermittel (28a, 28b, 28c, 28d) für eine Werkzeugmaschine (10) bereitstellt, mit einer volumetrischen Dosierpumpe (40) zur Förderung des Kühl-/Schmiermittels (28a, 28b, 28c, 28d), mit einer Steueranordnung (78) zum Ansteuern der Dosierpumpe (40) in Abhängigkeit von einer vorgegebenen Soll-Dosierrate des Kühl-/Schmiermittels (28a, 28b, 28c, 28d), **dadurch gekennzeichnet, dass** wenigstens zwei Vorratsbehälter (32a, 32b, 32c, 32d) zur Bereitstellung von Kühl-/Schmiermitteln (28a, 28b, 28c, 28) vorgesehen sind, dass die Vorratsbehälter (32a, 32b, 32c, 32d) an einer Auswahlventilanordnung (38) angeschlossen sind und dass die Steueranordnung (78) wenigstens ein Ventil-Ansteuersignal (68a, 68b, 68c, 68d) zur Ansteuerung der Auswahlventilanordnung (38) zur Auswahl wenigstens eines Vorratsbehälters (32a, 32b, 32c, 32) bereitstellt.

2. Minimalmengen-Kühlschmiersystem nach Anspruch 1, **dadurch gekennzeichnet, dass** die volumetrische Dosierpumpe (40) als Zahnradpumpe realisiert ist.

3. Minimalmengen-Kühlschmiersystem nach Anspruch 1 oder 2, **dadurch gekennzeichnet, dass** ein elektromotorischer Antrieb (58) zum Betreiben der volumetrischen Dosierpumpe (40) vorgesehen ist.

4. Minimalmengen-Kühlschmiersystem nach Anspruch 1, **dadurch gekennzeichnet, dass** die Auswahlventilanordnung (38) mehrere 2/2-WegeVentile (66a, 66b, 66c, 66d) enthält, wobei jedem Vorratsbehälter (32a, 32b, 32c, 32d) ein 2/2-Wege-Ventil (66a, 66b, 66c, 66d) zugeordnet ist.

5. Minimalmengen-Kühlschmiersystem nach Anspruch 1, **dadurch gekennzeichnet, dass** die Auswahlventilanordnung (38) ein Umschaltventil (90) zur Auswahl eines Vorratsbehälters (32a, 32b, 32c, 32d) enthält.

6. Minimalmengen-Kühlschmiersystem nach Anspruch 1, **dadurch gekennzeichnet, dass** den Vorratsbehältern (32a, 32b, 32c, 32d) jeweils Pegelsensoren (34a, 34b, 34c, 34d) zur Erfassung des Kühl-/Schmiermittel-Füllstands zugeordnet sind.

7. Minimalmengen-Kühlschmiersystem nach Anspruch 6, **dadurch gekennzeichnet, dass** ein Pegelstand-Anzeigesignal (82) vorgesehen ist, welches den Pegelstand der Kühl-/Schmiermittel (28a, 28b, 28c, 28d) in den Vorratsbehältern (32a, 32b, 32c, 32d) signalisiert.

8. Minimalmengen-Kühlschmiersystem nach Anspruch 6, **dadurch gekennzeichnet, dass** ein Restlaufsignal (84) vorgesehen ist, welches die verbleibende Restlaufzeit der Werkzeugmaschine (10) mit einem Kühl-/Schmiermittel (28a, 28b, 28c, 28d) signalisiert.

9. Minimalmengen-Kühlschmiersystem nach Anspruch 1, **dadurch gekennzeichnet, dass** die Vorratsbehälter (32a, 32b, 32c, 32d) drucklos mit dem Kühl-/Schmiermittel (28a, 28b, 28c, 28d) befüllt sind und dass die Vorratsbehälter (32a, 32b, 32c, 32d) höher als die volumetrische Dosierpumpe (40) angeordnet sind.

10. Minimalmengen-Kühlschmiersystem nach Anspruch 1, **dadurch gekennzeichnet, dass** die Werkzeugmaschine (10) eine Werkzeug-Detektionsvorrichtung (16) enthält, welche der Steueranordnung (78) ein Werkzeugsignal (18) zur Verfügung gestellt.

11. Minimalmengen-Kühlschmiersystem nach Anspruch 1, **dadurch gekennzeichnet, dass** ein als Handbedienpult (100) ausgestaltetes Bediengerät (70) zur Bedienung des Minimalmengen-Kühlschmiersystems (30) vorgesehen ist, welches wenigstens ein Potentiometer (102) zur Vorgabe der Dosierrate des Kühl-/Schmiermittels (28a, 28b, 28c, 28d) sowie einen Schalter zur Auswahl eines Vorratsbehälters (32a, 32b, 32c, 32d) aufweist.

12. Verfahren zum Betreiben des Minimalmengen-Kühlschmiersystems (30) nach einem der vorhergehenden Ansprüche, **dadurch gekennzeichnet, dass** die Steueranordnung (78) die Ventil-Ansteuersignale (68a, 68b, 68c, 68d) und/oder das Motor-Steuersignal (64) in Abhängigkeit von zumindest einer der folgenden Kenngrößen bereitstellt:
Werkstück-Material, Werkzeugtyp, Werkzeugdurchmesser, Vorschub des Werkzeugs, Zerspanleistung des Werkzeugs, Arbeitstiefe, Viskosität des Kühl-/Schmiermittels (28a, 28b, 28c, 28d), Schmierleistung des Schmiermittels, Kühlleistung des Kühlmittels, Bearbeitungsrichtung, Bearbeitung einer Kante des Werkstücks oder Vollschnitt.

13. Verfahren nach Anspruch 12, **dadurch gekennzeichnet, dass** die Kenngrößen in der in der Steueranordnung (78) enthaltenen Tabelle (86) hinterlegt werden.

14. Verfahren zum Betreiben des Minimalmengen-Kühlschmiersystems (30) nach Anspruch 8, **dadurch gekennzeichnet, dass** aus den Pegelständen der Kühl-/Schmiermittel (28a, 28b, 28c, 28d) in den Vorratsbehältern (32a, 32b, 32c, 32d) und anhand der eingestellten Förderrate der Dosierpumpe (40) eine Restlaufzeit des Minimalmengen-Kühlschmiersystems (30) ermittelt und angezeigt wird.

15. Computerprogramm zum Betreiben des Minimalmengen-Kühlschmiersystems (30) nach einem der Ansprüche 1 - 10, welches sämtliche Schritte zum Betreiben des Minimalmengen-Kühlschmiersystems (30) ausführt, wenn es in der Steueranordnung (78) abläuft.

## Claims

1. A minimal amount cooling lubrication system, which provides a coolant/lubricant (28a, 28b, 28c, 28d) for a machine tool (10), having a volumetric metering pump (40) for delivering the coolant/lubricant (28a, 28b, 28c, 28d), having a control arrangement (78) for activating the metering pump (40) as a function of a predefined setpoint metering rate of the coolant/lubricant (28a, 28b, 28c, 28d), **characterized in that** at least two storage containers (32a, 32b, 32c, 32d) are provided for providing coolants/lubricants (28a, 28b, 28c, 28), the storage containers (32a, 32b, 32c, 32d) are attached to a selection valve arrangement (38), and the control signal (78) provides at least one valve activation signal (68a, 68b, 68c, 68d) for activating the selection valve arrangement (38) to select at least one storage container (32a, 32b, 32c, 32).

2. The minimal amount cooling lubrication system according to Claim 1, **characterized in that** the volumetric metering pump (40) is implemented as a gearwheel pump.

3. The minimal amount cooling lubrication system according to Claim 1 or 2, **characterized in that** an electric motor drive (58) is provided for operating the volumetric metering pump (40).

4. The minimal amount cooling lubrication system according to Claim 1, **characterized in that** the selection valve arrangement (38) contains multiple 2/2-way valves (66a, 66b, 66c, 66d), wherein one 2/2-way valve (66a, 66b, 66c, 66d) is associated with each storage container (32a, 32b, 32c, 32d).

5. The minimal amount cooling lubrication system according to Claim 1, **characterized in that** the selection valve arrangement (38) contains a changeover valve (90) for selecting a storage container (32a, 32b, 32c, 32d).

6. The minimal amount cooling lubrication system according to Claim 1, **characterized in that** level sensors (34a, 34b, 34c, 34d) are respectively assigned to the storage containers (32a, 32b, 32c, 32d) to detect the coolant/lubricant fill level.

7. The minimal amount cooling lubrication system according to Claim 6, **characterized in that** a fill level display signal (82) is provided, which signals the fill level of the coolant/lubricant (28a, 28b, 28c, 28d) in the storage containers (32a, 32b, 32c, 32d).

8. The minimal amount cooling lubrication system according to Claim 6, **characterized in that** a residual running signal (84) is provided, which signals the remaining residual running time of the machine tool (10) with a coolant/lubricant (28a, 28b, 28c, 28d).

9. The minimal amount cooling lubrication system according to Claim 1, **characterized in that** the storage containers (32a, 32b, 32c, 32d) are filled in an unpressurized manner with the coolant/lubricant (28a, 28b, 28c, 28d), and the storage containers (32a, 32b, 32c, 32d) are arranged higher than the volumetric metering pump (40).

10. The minimal amount cooling lubrication system according to Claim 1, **characterized in that** the machine tool (10) contains a tool detection device (16), which provides a tool signal (18) to the control arrangement (78).

11. The minimal amount cooling lubrication system according to Claim 1, **characterized in that** an operating device (70), which is embodied as a handheld operating panel (100), is provided for operating the minimal amount cooling lubrication system (30), this operating device having at least one potentiometer (102) for specifying the metering rate of the coolant/lubricant (28a, 28b, 28c, 28d) and also a switch for selecting a storage container (32a, 32b, 32c, 32d).

12. A method for operating the minimal amount cooling lubrication system (30) according to one of the preceding claims, **characterized in that** the control arrangement (78) provides the valve activation signals (68a, 68b, 68c, 68d) and/or the motor control signal (64) as a function of at least one of the following parameters:
workpiece material, tool type, tool diameter, feed of the tool, cutting performance of the tool, working depth, viscosity of the coolant/lubricant (28a, 28b, 28c, 28d), lubrication performance of the lubricant, cooling performance of the coolant, machining direction, machining of an edge of the workpiece, or full cut.

13. The method according to Claim 12, **characterized in that** the parameters are stored in the table (86) contained in the control arrangement (78).

14. A method for operating the minimal amount cooling lubrication system (30) according to Claim 8, **characterized in that** a residual running time of the minimal amount cooling lubrication system (30) is ascertained from the levels of the coolant/lubricant (28a, 28b, 28c, 28d) in the storage containers (32a, 32b, 32c, 32d) and on the basis of the set delivery rate of the metering pump (40), and displayed.

15. A computer program for operating the minimal amount cooling lubrication system (30) according to one of Claims 1 to 10, which executes all steps for operating the minimal amount cooling lubrication system (30) when it runs in the control arrangement (78).

## Revendications

1. Système réfrigérant lubrifiant à quantités minimales qui prépare un agent de refroidissement/lubrification (28a, 28b, 28c, 28d) pour une machine outil (10) comportant une pompe doseuse volumétrique (40) de refoulement de l'agent de refroidissement/lubrification (28a, 28b, 28c, 28d), un dispositif de commande (78) pour commander la pompe doseuse (40) en fonction d'un débit de dosage de consigne prédéfini de l'agent de refroidissement/lubrification (28a, 28b, 28c, 28d),
**caractérisé en ce qu'**
il est prévu au moins deux réservoirs de stockage (32a, 32b, 32c, 32d) pour la préparation d'agent de refroidissement/lubrification (28a, 28b, 28c, 28d), les réservoirs de stockage (32a, 32b, 32c, 32d) sont reliés à un dispositif de soupape de sélection (38), et le dispositif de commande (78) prépare au moins un signal de commande de soupape (68a, 68b, 68c, 68d) pour permettre de commander le dispositif de soupape de sélection (38) pour permettre de sélectionner au moins un réservoir de stockage (32a, 32b, 32c, 32d).

2. Système réfrigérant lubrifiant à quantités minimales conforme à la revendication 1,
**caractérisé en ce que**
la pompe doseuse volumétrique (40) est réalisée sous la forme d'une pompe à engrenages.

3. Système réfrigérant lubrifiant à quantité minimale conforme à la revendication 1 ou 2,
**caractérisé en ce qu'**
il est prévu un entrainement électromoteur (58) pour permettre d'actionner la pompe doseuse volumétrique (40).

4. Système réfrigérant lubrifiant à quantités minimales conforme à la revendication 1,
**caractérisé en ce que**
le dispositif de soupape de sélection (38) renferme plusieurs soupapes à 2/2 voies (66a, 66b, 66c, 66d), à chacun des réservoirs de stockage (32a, 32b, 32c, 32d) étant associée une soupape à 2/2 voies (66a, 66b, 66c, 66d).

5. Système réfrigérant lubrifiant à quantités minimales conforme à la revendication 1,
**caractérisé en ce que**
le dispositif de soupape de sélection (38) renferme une soupape de commutation (90) pour permettre de sélectionner un réservoir de stockage (32a, 32b, 32c, 32d).

6. Système réfrigérant lubrifiant à quantités minimales conforme à la revendication 1,
**caractérisé en ce qu'**
aux réservoirs de stockage (32a, 32b, 32c, 32d) sont respectivement associés des capteurs de niveau (34a, 34b, 34c, 34d) pour permettre de détecter l'état de remplissage de l'agent de refroidissement/ lubrification.

7. Système réfrigérant lubrifiant à quantités minimales conforme à la revendication 6,
**caractérisé en ce qu'**
il est prévu un signal d'affichage d'état de niveau (82) qui signale l'état du niveau de l'agent de refroidissement/lubrification (28a, 28b, 28c, 28d) dans les réservoirs de stockage (32a, 32b, 32c, 32d).

8. Système réfrigérant lubrifiant à quantités minimales conforme à la revendication 6,
**caractérisé en ce qu'**
il est prévu un signal de fonctionnement résiduel (84) qui signale le temps de fonctionnement résiduel restant de la machine outil (10) avec un agent de refroidissement/lubrification (28a, 28b, 28c, 28d).

9. Système réfrigérant lubrifiant à quantités minimales conforme à la revendication 1,
**caractérisé en ce que**
les réservoirs de stockage (32a, 32b, 32c, 32d) sont remplis sans pression avec l'agent de refroidissement/lubrification (28a, 28b, 28c, 28d), et les réservoirs de stockage (32a, 32b, 32c, 32d) sont montés plus haut que la pompe doseuse volumétrique (40).

10. Système réfrigérant lubrifiant à quantités minimales conforme à la revendication 1,
**caractérisé en ce que**
la machine outil (10) renferme un dispositif de détection d'outil (16) qui fournit au dispositif de commande (78) un signal d'outil (18).

11. Système réfrigérant lubrifiant à quantités minimales conforme à la revendication 1,
**caractérisé en ce qu'**
il est prévu un appareil de commande (100) réalisé sous la forme d'un pupitre de commande manuelle (70) pour permettre de commander le système réfrigérant lubrifiant à quantités minimales (30) qui comporte au moins un potentiomètre (102) pour définir le débit de dosage de l'agent de refroidissement/lubrification (28a, 28b, 28c, 28d) ainsi qu'un commutateur permettant la sélection d'un réservoir de stockage (32a, 32b, 32c, 32d).

12. Procédé de gestion du système réfrigérant lubrifiant à quantités minimales (30) conforme à l'une des revendications précédentes, **caractérisé en ce que**
le dispositif de commande (78) fournit les signaux de commande de soupape (68a, 68b, 68c, 68d) et/ou le signal de commande du moteur (64) en fonction d'au moins l'une des caractéristiques suivantes :
matériau de la pièce, type d'outil, diamètre de l'outil, avance de l'outil, capacité de coupe de l'outil, profondeur de travail, viscosité de l'agent de refroidissement/lubrification (28a, 28b, 28c, 28d), capacité de lubrification de l'agent de lubrification, capacité de refroidissement de l'agent de refroidissement, direction de travail, usinage d'une arête de la pièce ou découpe dans la masse.

13. Procédé conforme à la revendication 12,
**caractérisé en ce que**
les grandeurs caractéristiques sont déposées dans le tableau (86) renfermé dans le dispositif de commande (78).

14. Procédé de gestion du système réfrigérant lubrifiant à quantités minimales (30) conforme à la revendication 8,
**caractérisé en ce que**
l'on détermine et affiche, à partir de l'état de niveau de l'agent de refroidissement/lubrification (28a, 28b, 28c, 28d) dans les réservoirs de stockage (32a, 32b, 32c, 32d) et le débit de refoulement réglé de la pompe doseuse (40) la durée de fonctionnement résiduel du système réfrigérant lubrifiant à quantités minimales (30).

15. Programme d'ordinateur pour la gestion du système réfrigérant lubrifiant à quantités minimales conforme à l'une des revendications 1 à 10, qui exécute toutes les étapes permettant la gestion du système réfrigérant lubrifiant à quantités minimales (30) lorsque se déroule dans le dispositif de commande (78).
